# FASCICULE DE BREVET EUROPEEN

(11) **EP 2 790 942 B1**
(45) Date de publication et mention de la délivrance du brevet: **09.03.2016**
(21) Numéro de dépôt: 12810331.4
(22) Date de dépôt: 03.12.2012
(51) Int. Cl.: B60K 1/04, B60K 6/12, B60K 6/28, B60K 6/30, H01M 2/10

(54) **VEHICULE HYBRIDE HYDRAULIQUE A STOCKEUR D'ENERGIE ELECTRIQUE IMPLANTE DE MANIERE OPTIMISEE**
HYDRAULISCHES HYBRIDFAHRZEUG MIT EINER OPTIMAL INSTALLIERTEN STROMSPEICHERVORRICHTUNG
HYDRAULIC HYBRID VEHICLE HAVING AN OPTIMALLY INSTALLED ELECTRICITY STORAGE DEVICE

(30) Priorité: 15.12.2011 FR 1161716
(43) Date de publication de la demande: 22.10.2014
(73) Titulaire: Technoboost, 75116 Paris (FR)
(72) Inventeur: GATEAU, Pascal, F-95620 Parmain (FR); FIORINI, Nelson, F-95450 Sagy (FR)
(74) Mandataire: Rosenberg, Muriel Sylvie
(86) Numéro de dépôt international: PCT/FR2012/052785
(87) Numéro de publication internationale: WO 2013/088025

(56) Documents cités:
- EP-A2- 1 628 028
- WO-A1-2006/055978
- GB-A- 2 475 971
- US-A1- 2010 151 989

## Description

La présente invention concerne un véhicule hybride utilisant une énergie hydraulique pour sa propulsion, dans lequel sont implantées des cellules de stockage d'énergie électrique de type « supercondensateurs » ou « supercapacités », désignées également par UCAPs, pour alimenter le réseau électrique de bord du véhicule et/ou suppléer la batterie standard du véhicule, notamment dans les phases de démarrage du moteur thermique.

Les véhicules hybrides comportent une chaîne de traction comprenant un moteur thermique qui entraîne une pompe hydraulique, afin de recharger des accumulateurs de pression hydraulique pour stocker cette énergie.

Il est connu du document FR 29 74 035 qui sert de base pour la présentation en deux parties de la revendication 1, d'implanter les accumulateurs de pression de forme tubulaire allongée, sous le sous-bassement du véhicule.

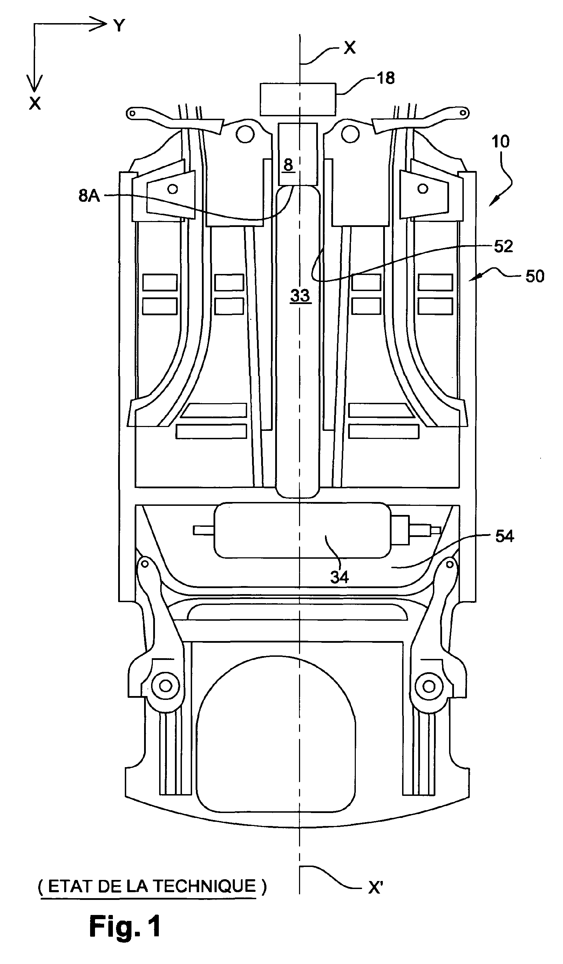

La figure 1 illustre, par une vue de dessous, schématique et partielle, un véhicule hybride hydraulique 10 comprenant une transmission hydrostatique dont les principaux composants sont notamment le moteur hydraulique 18, le bloc hydraulique 8, 8A et les accumulateurs de pression 33, 34.

Les accumulateurs de pression 33, 34 constituent chacun un tube allongé de section circulaire réduite, ce qui est favorable pour limiter les contraintes dans cet accumulateur. Un accumulateur haute pression 33 est disposé sous le sous-bassement 50 du véhicule, longitudinalement dans l'axe XX' de ce véhicule. Un accumulateur basse pression 34 est fixé rigidement à l'extrémité arrière de l'accumulateur haute pression, en y étant disposé sensiblement transversalement.

De plus, ce sous-ensemble hydraulique présentant une forme générale en « T », comporte avantageusement une partie longitudinale disposée sous le sous-bassement, dans un tunnel longitudinal 52, et une partie transversale disposée dans un creux transversal 54 disponible sous les sièges prévus pour des passagers arrière du véhicule. Ce type de tunnel est souvent prévu dans certains véhicules pour recevoir un tube d'échappement et ce type de creux transversal est souvent prévu dans certains véhicules pour recevoir un réservoir à carburant.

Dans cette implantation, la ligne d'échappement (non représentée) passe en dehors du tunnel pour laisser place à l'accumulateur haute pression.

La machine hydraulique reliée à des roues motrices (non représentées), peut fonctionner en moteur pour délivrer une puissance mécanique à des roues motrices en prélevant de l'énergie stockée dans les accumulateurs de pression, ou en pompe, pour charger ces accumulateurs en freinant le véhicule, de manière à récupérer l'énergie cinétique du véhicule.

Cette utilisation d'énergie hydraulique stockée permet d'optimiser le fonctionnement du moteur thermique 30, et de réduire sa consommation ainsi que les émissions de gaz polluants. Le stockage d'énergie hydraulique permet de plus de rouler en mode hydraulique avec zéro émission, appelé mode « ZEV », le moteur thermique restant à l'arrêt.

Lorsque le véhicule roule en mode hydraulique pur « ZEV » et donc moteur thermique arrêté, l'alimentation électrique du réseau de bord doit continuer à être assurée en toute transparence vis-à-vis du conducteur et des passagers du véhicule (confort).

Les stockeurs d'énergie électrique tels que les batteries au plomb traditionnellement utilisées pour fournir du courant au réseau de bord, ne sont pas adaptées au fonctionnement des véhicules hybrides hydrauliques dont le fonctionnement en mode impulsionnel sollicite la batterie sur des cycles de charges et de décharges très courts et répétés , ce qui tend à détériorer les batteries très rapidement (vieillissement prématuré)

Par mode impulsionnel, on entend un mode de fonctionnement dans lequel le moteur thermique, bien que non utilisé pour la traction du véhicule, est sollicité pendant une période très courte et de manière répétée, pour pouvoir activer la pompe hydraulique destinée à maintenir une pression suffisante dans les accumulateurs de pression.

La présente invention a notamment pour but d'éviter ces inconvénients, en proposant un véhicule hybride hydraulique comprenant un stockeur d'énergie électrique qui se charge et se décharge très rapidement et acceptant des courants haute tension, sans détériorer le cyclage de la batterie et donc sa durée de vie, en optimisant d'autre part son implantation dans le véhicule.

Elle propose à cet effet un véhicule hybride hydraulique, comportant un moteur thermique entraînant une pompe hydraulique connectée à des accumulateurs de pression ; l'un des accumulateurs de forme tubulaire allongée étant disposé longitudinalement suivant l'axe du véhicule dans un tunnel central longitudinal, défini par un renfoncement ménagé dans le sous-bassement du véhicule. Le véhicule est caractérisé en ce qu'il comporte en outre un stockeur d'énergie électrique comprenant au moins une cellule de stockage d'énergie électrique de type UCAP, disposée dans le tunnel, entre l'accumulateur de pression et le sous-bassement du véhicule.

Selon une caractéristique, le stockeur d'énergie électrique est disposé à une extrémité de l'accumulateur de pression.

Selon une autre caractéristique, le stockeur d'énergie électrique est disposé à l'extrémité avant de l'accumulateur, au voisinage d'une partie du sous-bassement appelée tablier.

Selon une autre caractéristique, le stockeur d'énergie électrique comporte un boîtier en deux parties liées solidairement entre elles : une première partie dite inférieure en contact avec l'accumulateur et une partie deuxième partie dite supérieure inclinée par rapport à la première ; les deux parties définissant des parallélépipèdes rectangles.

Selon une autre caractéristique, la partie supérieure inclinée est imbriquée dans la première.

Selon une autre caractéristique la base de la partie inférieure comporte un renfoncement longitudinal dont la forme est complémentaire de la forme de l'accumulateur, et en ce que la partie supérieure est inclinée d'un angle correspondant sensiblement à l'angle d'inclinaison formé par le tablier par rapport à un plan horizontal de référence du véhicule.

Selon une autre caractéristique, la face supérieure de la partie supérieure est adjacente au tablier du véhicule.

Selon une autre caractéristique, l'accumulateur de pression est un accumulateur haute pression.

L'invention a pour autre objet un stockeur d'énergie électrique comportant une pluralités de cellules de stockage d'énergie électrique de type UCAP, réparties dans un boîtier étanche , en deux parties liées solidairement entre elles : une première partie, et une partie deuxième partie inclinée par rapport à la première ; les deux parties définissant des parallélépipèdes rectangles ; la base de la première partie comporte un renfoncement longitudinal dont la forme est complémentaire de la forme d'un accumulateur de pression, et en ce que la deuxième partie est inclinée d'un angle correspondant sensiblement à l'angle d'inclinaison formé par le tablier d'un véhicule par rapport à un plan horizontal de référence du sous-bassement du véhicule.

Selon une caractéristique du stockeur d'énergie électrique, le boîtier est monobloc, obtenu par moulage.

Un avantage de l'implantation du stockeur dans le tunnel est de profiter d'une zone naturellement ventilée au roulage (dégagement de calories) tout en étant protégé contre les chocs divers ; les UCAPS étant par construction, sensibles à la chaleur et aux chocs.

Un autre avantage est la simplification de l'architecture du véhicule hybride hydraulique, la facilité de montage et le nombre de pièces limité.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1, déjà décrite, est une vue de dessous schématique et partielle, d'un véhicule automobile hybride hydraulique de l'état de l'art ;
- la figure 2, illustre un stockeur d'énergie électrique selon l'invention
- la figure 3 illustre une vue, en coupe partielle longitudinale, de l'avant d'un véhicule hybride hydraulique selon l'invention ; et
- la figure 4 illustre une vue partielle en coupe transversale de ce même véhicule.

Sur les figures, on a fait apparaître le référentiel XYZ qui est habituellement utilisé pour positionner un véhicule dans l'espace.

Sur les figures, les éléments communs avec ceux de la figure 1 (état de la technique) sont désignés, respectivement, par les mêmes références numériques.

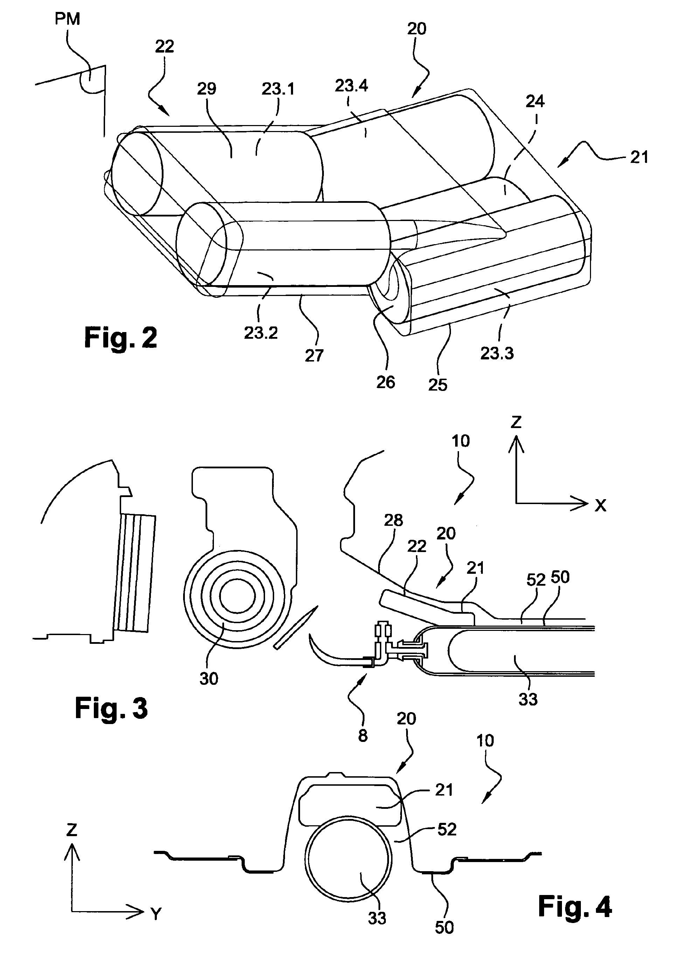

Le stockeur 20 comporte un boîtier étanche 21-22 renfermant quatre UCAPs 23-1 à 23-4 de forme générale cylindrique dans l'exemple décrit en référence à la figure 2.

Les UCAPS peuvent être montées dans le boîtier en bord de ligne, lors de l'étape de préparation d'organes mécaniques (POM), sur la luge en usine terminale.

Leur nombre peut varier en fonction de l'énergie électrique nécessaire à l'alimentation du réseau électrique de bord qui dépend du nombre et/ou de la nature des consommateurs électriques embarqués dans le véhicule.

Le boîtier comprend deux parties 21, 22 présentant chacune une forme générale d'un parallélépipède rectangle.

Les deux parties sont imbriquées l'une dans l'autre par une de leurs faces latérales et une partie est inclinée par rapport à l'autre, d'un angle déterminé.

La partie du boîtier destinée à être positionnée sur l'accumulateur haute pression, et qui sera désignée par partie inférieure 21, comporte un renfoncement longitudinale 24 partiellement cylindrique de section circulaire, ménagé dans sa face inférieure ou base 25, et s'étendant sur toute sa longueur en étant centrée sur son plan médian vertical PM.

Cette partie inférieure du boîtier est utilisée comme interface avec l'accumulateur haute pression.

Le renfoncement présente un rayon qui est déterminé pour correspondre sensiblement au rayon de la section circulaire de l'accumulateur haute pression.

La partie inférieure ainsi conformée, permet le positionnement du boîtier, et donc du stockeur, sur la surface cylindrique de l'accumulateur ; le stockeur venant « chevaucher » l'accumulateur haute pression.

Deux 23-1 et 23-2 des quatre UCAPs sont logées de part et d'autre du renfoncement qui, vu de l'intérieur du boîtier, se présente sous la forme d'un bossage longitudinal.

Ce bossage délimite par ailleurs les emplacements aptes à accueillir les deux UCAPs.

L'autre partie du boîtier, qui est inclinée par rapport à la partie inférieure et qui sera désignée par partie supérieure 22, comprend les deux autres UCAPs 23-3 et 23-4 disposées respectivement contre ses bords latéraux parallèles s'étendant eux-mêmes parallèlement au plan médian du boîtier qui est aussi le plan de symétrie du boîtier.

La partie supérieure du boîtier est imbriquée dans la face latérale 26 de la partie inférieure ; la face inférieure 27 de la partie supérieure aboutant la face latérale de la partie inférieure, au-dessus du renfoncement de manière à ne pas empiéter sur ce dernier.

Les quatre UCAPs sont donc agencées deux à deux dans leurs parties de boîtier respectives.

L'inclinaison de la partie supérieure du boîtier est déterminée pour être adjacente à la pente définie par le sous-bassement au niveau du tablier 28 et correspond sensiblement à la pente des caves à pieds des passagers avant; vu de l'intérieur de l'habitacle. Son angle d'inclinaison correspondant sensiblement à l'angle d'inclinaison formé par le tablier par rapport à un plan horizontal de référence du sous-bassement du véhicule.

Le boîtier est de préférence monobloc, obtenu par moulage de matière plastique.

Ainsi, de manière avantageuse, l'implantation du stockeur sous le sous-bassement de la caisse du véhicule, exploite de manière optimale l'espace disponible entre l'extrémité avant de l'accumulateur haute pression et le sous-bassement.

Le refroidissement du stockeur est assuré au roulage ainsi que la protection aux chocs.

## Revendications

1. Véhicule hybride hydraulique (10), comportant un moteur thermique (30) entraînant une pompe hydraulique (18) connectée à des accumulateurs de pression (33, 34), l'un (33) des accumulateurs de forme tubulaire allongée étant disposé longitudinalement suivant l'axe du véhicule (XX') dans un tunnel central longitudinal (52), défini par un renfoncement ménagé dans le sous-bassement du véhicule, **caractérisé en ce qu'**il comporte en outre un stockeur d'énergie électrique (20) comprenant au moins une cellule de stockage d'énergie électrique (23) de type UCAP, disposée dans le tunnel, entre l'accumulateur de pression et le sous-bassement (50) du véhicule.

2. Véhicule selon la revendication 1, **caractérisé en ce que** le stockeur d'énergie électrique est disposé à une extrémité de l'accumulateur de pression.

3. Véhicule selon la revendication précédente, **caractérisé en ce que** le stockeur d'énergie électrique est disposé à l'extrémité avant de l'accumulateur, au voisinage d'une partie du sous-bassement appelée tablier (28)

4. Véhicule selon la revendication précédente, **caractérisé en ce que** le stockeur d'énergie électrique comporte un boîtier en deux parties (21-22) liées solidairement entre elles : une première partie dite inférieure (21) en contact avec l'accumulateur et une partie deuxième partie dite supérieure (22) inclinée par rapport à la première ; les deux parties définissant des parallélépipèdes rectangles.

5. Véhicule selon la revendication précédente, **caractérisé en ce que** la partie supérieure inclinée, est imbriquée dans la première.

6. Véhicule selon l'une des revendications 4 ou 5, **caractérisé en ce que** la base (25) de la partie inférieure comporte un renfoncement longitudinal (24) dont la forme est complémentaire de la forme de l'accumulateur, et **en ce que** la partie supérieure est inclinée d'un angle correspondant sensiblement à l'angle d'inclinaison formé par le tablier par rapport à un plan horizontal de référence du véhicule.

7. Véhicule selon la revendication précédente, **caractérisé en ce que** la face supérieure (29) de la partie supérieure est adjacente au tablier du véhicule.

8. Véhicule selon l'une des revendications précédentes, **caractérisé en ce que** l'accumulateur de pression est un accumulateur haute pression.

9. Stockeur d'énergie électrique (20) comportant une pluralités de cellules de stockage d'énergie électrique de type UCAP (23-1 à 23-4), réparties dans un boîtier étanche (20), en deux parties (21,22) liées solidairement entre elles : une première partie (21), et une partie deuxième partie (22) inclinée par rapport à la première ; les deux parties définissant des parallélépipèdes rectangles ; la base (25) de la première partie comporte un renfoncement longitudinal (24) dont la forme est complémentaire de la forme d'un accumulateur de pression (33), et en ce que la deuxième partie est inclinée d'un angle correspondant sensiblement à l'angle d'inclinaison formé par le tablier (28) d'un véhicule par rapport à un plan horizontal de référence du sous-bassement du véhicule.

10. Stockeur d'énergie électrique selon la revendication précédente, **caractérisé en ce que** le boîtier est monobloc, obtenu par moulage.

## Patentansprüche

1. Hydraulisches Hybridfahrzeug (10), das eine Brennkraftmaschine (30) umfasst, die eine hydraulische Pumpe (18) antreibt, die an Druckspeicher (33, 34) angeschlossen ist, wobei einer (33) der Speicher mit länglicher Röhrenform längs entlang der Achse des Fahrzeugs (XX') in einem zentralen Längstunnel (52) angeordnet ist, der von einer Verstärkung definiert ist, die in der Fahrzeugunterseite eingerichtet ist, **dadurch gekennzeichnet, dass** es außerdem einen Stromspeicher (20) umfasst, der mindestens eine Stromspeicherzelle (23) das Typs UCAP umfasst, die in dem Tunnel zwischen dem Druckspeicher und der Fahrzeugunterseite (50) angeordnet ist.

2. Fahrzeug nach Anspruch 1, **dadurch gekennzeichnet, dass** der Stromspeicher an einem Ende des Druckspeichers angeordnet ist.

3. Fahrzeug nach dem vorhergehenden Anspruch, **dadurch gekennzeichnet, dass** der Stromspeicher an dem vorderen Ende des Druckspeichers in der Nähe eines Teils der Unterseite, der Schürze (28) genannt wird, angeordnet ist.

4. Fahrzeug nach dem vorhergehenden Anspruch, **dadurch gekennzeichnet, dass** der Stromspeicher ein Gehäuse aus zwei Teilen (21-22) umfasst, die fest miteinander verbunden sind: ein erster, unterer genannter Teil (21) in Berührung mit dem Druckspeicher, und ein zweiter, oberer genannter Teil (22), der in Bezug zu dem ersten geneigt ist, wobei die beiden Teile rechtwinkelige Parallelepipede definieren.

5. Fahrzeug nach dem vorhergehenden Anspruch, **dadurch gekennzeichnet, dass** der obere geneigte Teil in dem ersten verschachtelt ist.

6. Fahrzeug nach einem der Ansprüche 4 oder 5, **dadurch gekennzeichnet, dass** die Basis (25) des unteren Teils eine Längsvertiefung (24) umfasst, deren Form zu der Form des Druckspeichers komplementär ist, und dass der obere Teil mit einem Winkel geneigt ist, der im Wesentlichen dem Neigungswinkel entspricht, der von der Schürze in Bezug zu einer horizontalen Bezugsebene des Fahrzeugs gebildet wird.

7. Fahrzeug nach dem vorhergehenden Anspruch, **dadurch gekennzeichnet, dass** die Oberseite (29) des oberen Teils mit der Schürze des Fahrzeugs benachbart ist.

8. Fahrzeug nach einem der vorhergehenden Ansprüche, **dadurch gekennzeichnet, dass** der Druckspeicher ein Hochdruckspeicher ist.

9. Stromspeicher (20), der mehrere Stromspeicherzellen des Typs UCAP (23-1 bis 23-4) umfasst, die in einem dichten Gehäuse (20) verteilt sind, aus zwei Teilen (21, 22) die fest miteinander verbunden sind: ein erster Teil (21) und ein zweiter Teil (22), der in Bezug zu dem ersten geneigt ist, wobei die zwei Teile rechtwinkelige Parallelepipede bilden, die Basis (25) des ersten Teils eine Längsvertiefung (24) umfasst, deren Form zu der Form eines Druckspeichers (33) komplementär ist, und dass der zweite Teil mit einem Winkel geneigt ist, der im Wesentlichen dem Neigungswinkel entspricht, der von der Schürze (28) eines Fahrzeugs in Bezug zu einer horizontalen Bezugsebene der Unterseite des Fahrzeugs gebildet wird.

10. Stromspeicher nach dem vorhergehenden Anspruch, **dadurch gekennzeichnet, dass** das Gehäuse einstückig ist, durch Formen erhalten wird.

## Claims

1. A hydraulic hybrid vehicle (10), comprising a heat engine (30) driving a hydraulic pump (18) connected to pressure accumulators (33, 34), one (33) of the elongate, tubular accumulators being arranged longitudinally along the axis of the vehicle (XX') in a longitudinal central tunnel (52), defined by a recess provided in the underbody of the vehicle, **characterized in that** it further comprises an electricity storage device (20) including at least one UCAP electricity storage cell (23), which is arranged in the tunnel between the pressure accumulator and the underbody (50) of the vehicle.

2. The vehicle according to Claim 1, **characterized in that** the electricity storage device is arranged at one end of the pressure accumulator.

3. The vehicle according to the preceding claim, **characterized in that** the electricity storage device is arranged at the front end of the accumulator, in the vicinity of a part of the underbody designated the cowl (28).

4. The vehicle according to the preceding claim, **characterized in that** the electricity storage device comprises a casing in two parts (21-22), connected integrally with one another: a first part designated the lower part (21) in contact with the accumulator, and a second part designated the upper part (22), inclined with respect to the first part; the two parts defining rectangular parallelepipeds.

5. The vehicle according to the preceding claim, **characterized in that** the upper inclined part is imbricated in the first part.

6. The vehicle according to one of Claims 4 or 5, **characterized in that** the base (25) of the lower part comprises a longitudinal reinforcement (24), the shape of which is complementary to the shape of the accumulator, and **in that** the upper part is inclined by an angle corresponding substantially to the angle of inclination formed by the cowl with respect to a horizontal plane of reference of the vehicle.

7. The vehicle according to the preceding claim, **characterized in that** the upper face (29) of the upper part is adjacent to the cowl of the vehicle.

8. The vehicle according to one of the preceding claims, **characterized in that** the pressure accumulator is a high pressure accumulator.

9. An electricity storage device (20) comprising a plurality of UCAP electricity storage cells (23-1 to 23-4), distributed in a tight casing (20), in two parts (21, 22) connected integrally with one another: a first part (21), and a second part (22) inclined with respect to the first part; the two parts defining rectangular parallelepipeds; the base (25) of the first part comprises a longitudinal reinforcement (24), the shape of which is complementary to the shape of a pressure accumulator (33), and in that the second part is inclined by an angle corresponding substantially to the angle of inclination formed by the cowl (28) of a vehicle with respect to a horizontal plane of reference of the underbody of the vehicle.

10. The electrical energy storage device according to the preceding claim, **characterized in that** the casing is in a single piece, obtained by casting.
